# EUROPEAN PATENT SPECIFICATION

(11) **EP 1 906 500 B1**
(45) Date of publication and mention of the grant of the patent: **13.05.2009**
(21) Application number: 07075856.0
(22) Date of filing: 01.10.2007
(51) Int. Cl.: H02G 3/12

(54) **Flush junction box with lid**
Einbaudose mit Deckel
Boîtier à affleurement avec couvercle

(30) Priority: 29.09.2006 NL 1032599
(43) Date of publication of application: 02.04.2008
(73) Proprietor: ABB B.V., 6716 AA Ede (NL)
(72) Inventor: Renckens, Thomas Phillippus, 3742 ND BAARN (NL); Witte, Adriaan Marinus, 3436 HT Nieuwegein (NL)
(74) Representative: De Hoop, Eric

(56) References cited:
- EP-A- 1 330 002
- DE-C- 619 031
- FR-E- 89 326
- NL-A- 292 559

## Description

### BACKGROUND OF THE INVENTION

The invention relates to an installation box to be placed in a hole in a wall of a building according to the preamble of claim 1. Such installation box is known from DE 619031.

Such boxes form a part of the electric wiring of the building, in which switch material is attached onto the box and junctions are included between the cables in the box. During the installation a blind hole is drilled in the wall, after which the box is put into the hole subsequently to be secured for instance by plaster.

A further known box comprises several resilient placement protrusions all around its outside with which the box can be held in the hole before and during applying the plaster. The placement protrusions centre the box in the hole. The use of placement protrusions, however, may not always be necessary. As the placement protrusions are firmly connected to the box, their removal without damaging the box will be difficult. In that case a flush junction box without placement protrusions will have to be used.

It is an object of the invention to provide a flush junction box of which a placement protrusion can easily be arranged and/or removed.

### SUMMARY OF THE INVENTION

According to one aspect the invention provides an installation box according to claim 1.

The placement protrusion forms a unity with the lid, as result of which it can be arranged and/or removed together with the lid when necessary. Changing the lid will then suffice to use the placement protrusion or to leave it out.

The presence of the placement protrusion can be clearly visible when the placement protrusion extends along the outside of the circumferential wall.

The placement protrusion is able to engage over a large range onto the bounding wall wherein the placement protrusion extends substantially transverse to the plane of the installation opening and/or the lid.

In one embodiment the placement protrusion forms a unity with the lid via a break connection. When necessary, the placement protrusion can be removed from the lid in a controlled manner by means of the break connection. The same lid can then be used both with and without placement protrusion.

The placement protrusion may act as a lever for increasing the break-off forces on the break connection, when the break connection is situated at an upper end of the placement protrusion.

In one embodiment the break connection with respect to the placement protrusion is situated at the side of the lid.

In one embodiment the installation box comprises first attachment means at the circumferential wall and the placement protrusion for attachment of the lid on the installation opening. The placement protrusion can keep the lid in its place.

In one embodiment thereof the first attachment means comprise a first abutment at the placement protrusion, which first abutment is spaced apart from the lid, and a second abutment at the circumferential wall that cooperates with the first abutment, preferably at approximately half the height of the installation box.

In one embodiment the circumferential wall comprises accommodation means for at least partially accommodating the placement protrusion. The accommodation means are able to counteract rotation of the lid on the installation opening due to accommodation of the placement protrusion.

Rotation of the lid can be counteracted in two directions of rotation when the placement protrusion is at least partially situated between projecting edges at the circumferential wall, which projecting edges extend parallel to the placement protrusion. Due to rotation of the lid about the installation opening, the placement protrusion can be bent, as are result of which it can break when using the break connection. The placement protrusion therefore can be removed from the lid by rotating the lid and the circumferential wall with respect to each other, for instance between two hands. The placement protrusion can be removed in both directions of rotation.

In one development the placement protrusion comprises an elongated base member and an anchoring member integrally formed with the base member.

The placement protrusion can be pre-biassed against the bounding wall to keep the installation box in the hole when base member forms a spring lip of which a free end is movable in a direction transverse to the plane of the circumferential wall.

When the anchoring member comprises a placement edge facing away from the circumferential wall for abutment against the bounding wall, wherein the placement edge changes at an angle into an anchoring edge offset from the circumferential wall, the edges at the level of the angle are able to form a barbed section with which the installation box can be kept in the hole more reliably.

In one embodiment the placement edge changes at a perpendicular or acute angle into the anchoring edge.

With the anchoring edge, the placement protrusion may engage behind irregularities of the bounding wall when a locking surface of the anchoring edge faces the lid or extends parallel to a plane defined by the installation opening and/or installation edge.

The installation box, with little hindrance from the placement protrusion, can be inserted into the hole and if necessary be pre-biassed to the circumferential wall when at an insertion end the placement protrusion or an anchoring member thereof comprises a run-on edge having an inclined position with respect to the circumferential wall and the bottom.

The installation box can be centred with respect to the hole when the lid comprises several placement protrusions placed distributed around a circumferential wall of the lid.

In one embodiment the placement protrusions are connected to the lid in pairs that are placed evenly distributed around the circumferential edge.

The placement protrusions may form the outermost engaging members of the installation box when the installation box comprises a curved round-going circumferential wall, preferably circular, wherein the placement protrusions comprise side edges that face away from the circumferential wall and which when the installation box is not placed define a largest circumscribed circle of the installation box.

The lid may for instance after breaking the break connection be kept on the installation opening when the installation box comprises second attachment means at the lid and the circumferential wall for at least temporarily attaching the lid on the installation opening in addition to or as an alternative to the first attachment means.

In one embodiment the lid, and thus the placement protrusion, is made of an injection mouldable synthetic material, preferably a brittle synthetic material. Due to the brittleness the placement protrusion or the break connection can easily be broken off from the lid.

The invention furthermore relates to a lid intended and suitable for the installation box according to the invention.

The aspects and measures described in this description and the claims of the application and/or shown in the drawings of this application may where possible also be used individually. Said individual aspects and other aspects, may be the subject of divisional patent applications relating thereto. This particularly applies to measures and aspects described per se in the sub claims.

### SHORT DESCRIPTION OF THE DRAWINGS

The invention will be elucidated on the basis of a number of exemplary embodiments shown in the attached drawings, in which:
Figure 1 shows a view in perspective of an installation box according to the invention;

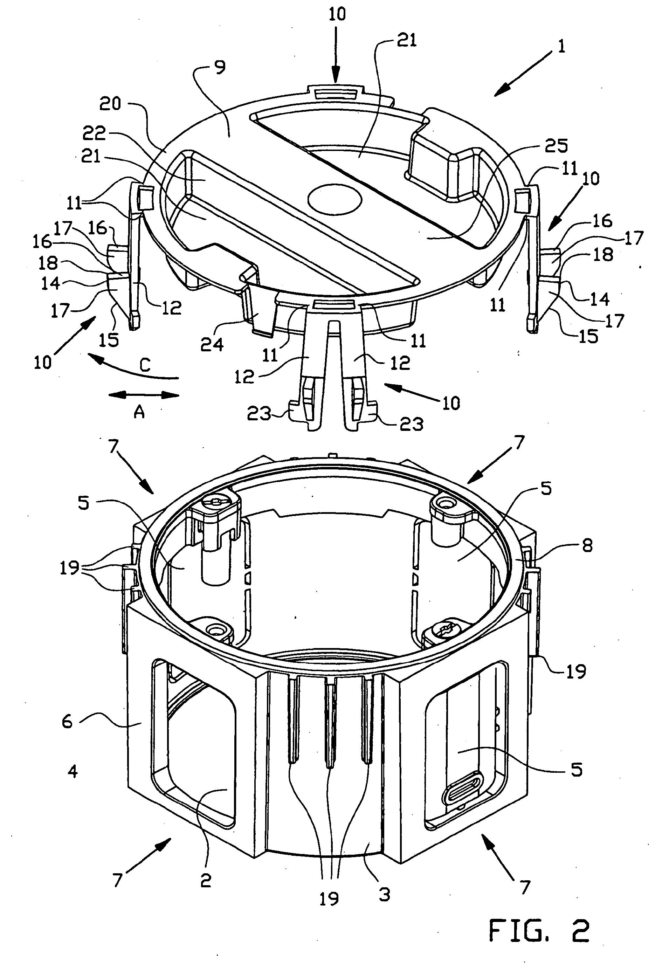

Figure 2 shows a view in perspective of the installation box according to figure 1, wherein the lid has been removed; and
Figure 3 shows a top view of the installation box according to figure 1.

### DETAILED DESCRIPTION OF THE DRAWINGS

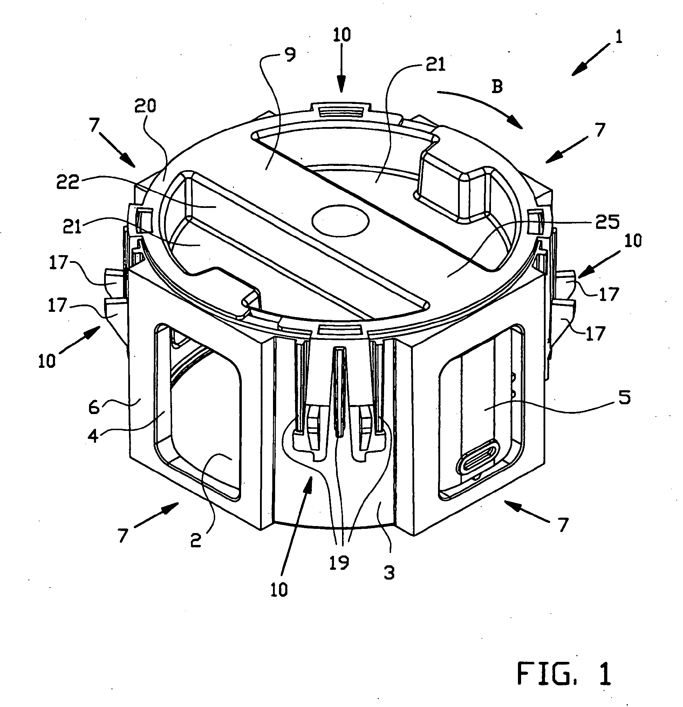

The synthetic installation box 1 according to figure 1 comprises a bottom wall 2 and a circumferential wall 3 forming a unity, an installation edge 8 at the circumferential wall 3 for building up switch material, passage openings 4 for lines in the circumferential wall 3, and a round lid 9 that can be placed on the installation edge 8. Breakthrough gates 5 close off a number of passage openings 4. Around the outside of the circumferential wall 3, the installation box 1 comprises four couplings 7, with along the longitudinal sides 6 attachment rails, that are not shown, for coupling the installation box 1 to a next installation box.

The lid 9 comprises a placement edge 20 for abutting the installation edge 8, two lowerings 21 within the installation edge 8, an engagement member 25 having two parallel engagement surfaces 22 between the lowerings 21, and a number of clamping hooks or attachment lips 24 for attachment of the lid 9 behind the installation edge 8, and four, in this example identical, elongated attachment protrusions 10. The attachment protrusions 10 extend in coupled pairs between the couplings 7 along the circumferential wall 3 for securing the installation box 1 in a hole that is not further shown in for instance a brick wall. The pairs of attachment protrusions 10 each time form a unity with the lid 9 via two break bridges 11.

The attachment protrusions 10 each comprise two elongated base members 12 that extend between three projecting edges 19 formed at the circumferential wall 3. The base members 12 at their ends comprise sideward abutments 23 which when the lid 9 is placed engage behind the ends of the projecting edges 19.

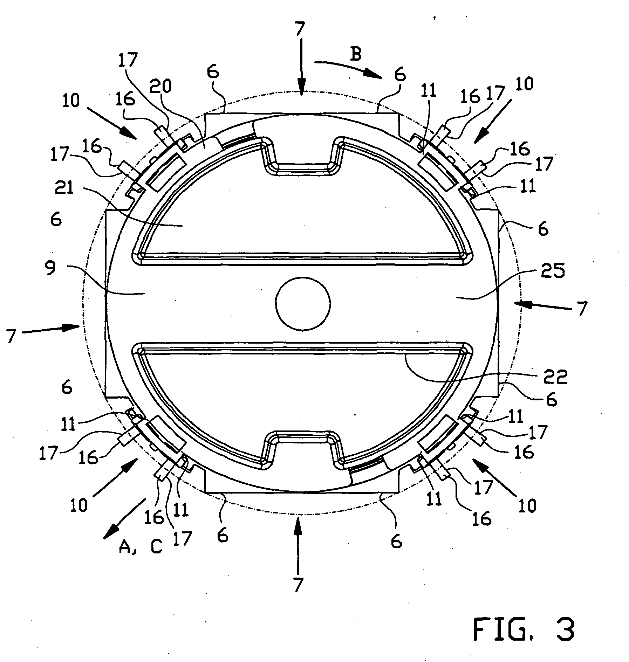

The attachment protrusions 10 at the ends of the base members 12 comprise an anchoring member 17 with a straight abutment edge 14 facing away from the outside of the circumferential wall 3, and extending substantially transverse to the plane of the installation edge 8 along the circumferential wall 3. As shown in figure 3 the abutment edges 14 of the attachment protrusions 10 project from a circumscribed circle D due to the longitudinal sides 6 of the couplings 7. Each abutment edge 14 at the bottom side changes into an inclined insertion edge 1 5 oriented towards the bottom 2, and at the opposite side the abutment edge 14 changes according to a right pointed angle 18 into an anchoring edge 16 of which the plane extends substantially parallel to the plane of the installation edge 8.

Due to the elasticity of the synthetic material at the location of the break bridges 11, the attachment protrusions 10 may bend to a limited extent in the direction A from and towards the circumferential wall 3. The attachment protrusions 10 can be broken off in pairs from the lid 9 by moving said pair in direction C to the outside, as a result of which the synthetic break bridges 11 rupture. The attachment protrusions can be broken off from the lid 9 in one go by manually taking the lid 9 by the engagement surfaces 22 and rotating the lid 9 in direction B with respect to the circumferential wall 3. The base members 12 then move simultaneously in direction C out of the projecting edges 19, as a result of which the synthetic break bridges 11 rupture. Alternatively the base members 12 can remain confined between the projecting edges 19, wherein the break bridges 11 remain in the plane of the placement edge 8 and break through.

When building in the installation box 1 in for instance a rough lime-sandstone wall, a blind hole is drilled into the wall, the diameter of which hole is a few millimetres larger than the circumscribed circle D of the couplings 7 of installation box 1. During placement of the installation box 1 the attachment protrusions 10 are pre-biassed towards the circumferential wall 3 by the insertion edges 15, after which the abutment edges 14 scrape along the circumferential wall of the hole. The pointed angles 18 together with the anchoring edges 16 then form barbs counteracting that the installation box 1 moves back out of the hole. The attachment protrusions 10 then centre the installation box 1 with respect to the hole.

When it turns out to be necessary to give the installation box 1 an eccentric position with respect to the hole, for instance because a series of holes for a series of coupled installation boxes 1 are not situated according to a straight line, one or several of the attachment protrusions 10 can be broken off, for instance two consecutive attachment protrusions 10, in order to give the installation box 1 more adjustment space in that direction. The opposite attachment protrusions 10 may also in this situation get into stopping contact with the circumferential wall of the hole as a result of a position that is less compressed.

After placement of the installation box 1 in the blind hole in the wall it can be fixated in there by applying for instance a layer of plaster on the wall and the installation box 1. The attachment protrusions 10, which are fixated then as well, keep the lid 9 placed on the installation edge 8. The lid 9 can be removed by rotating it manually on direction C with respect to the circumferential wall 3, wherein the attachment protrusions 10 are left behind in the plaster. After the break bridges 11 have ruptured, the lid 9 can be (temporarily) placed back, wherein the attachment lips or clamping hooks 24 keep the lid 9 on the installation edge 8.

## Claims

1. Installation box (1) to be placed in a hole in a wall of a building, comprising a bottom wall (2), a circumferential wall (3) of which an installation edge (8) for the build-up of switch material bounds an installation opening, a lid (9) for hovering the installation opening, and at least one placement protrusion (10) for engagement onto a bounding wall of the hole, **characterized in that** the placement protrusion (10) forms a unity with the lid (9).

2. Installation box (1) according to claim 1, wherein the placement protrusion (10) extends along the outside of the circumferential wall (3).

3. Installation box (1) according to claim 1 or 2, wherein the placement protrusion (10) extends substantival transverse to the plane of the installation opening and/or the lid (9).

4. Installation box (1) according to any one of the preceding claims, wherein the placement protrusion (10) forms a unity with the lid (9) via a break connection (11), wherein the break connection (11) preferably is situated at an upper end of the placement protrusion (10) and/or wherein the break connection (11) with respect to the placement protrusion (10) preferably is situated at the side of the lid (9).

5. Installation box (1) according to any one of the preceding claims, comprising first attachment means (19, 23) at the circumferential wall (3) and the placement protrusion (10) for attachment of the lid (9) on the installation opening, wherein the first attachment means (19, 23) preferably comprise a first abutment (23) at the placement protrusion (10), which first abutment is spaced apart from the lid (9), and a second abutment (19) at the circumferential wall (3) that cooperates with the first abutment (23), preferably at approximately half the height of the installation box (1).

6. Installation box (1) according to any one of the preceding claims, wherein the circumferential wall (3) comprises accommodation means (19) for at least partially accommodating the placement protrusion (10), wherein the placement protrusion (10) preferably is at least partially situated between projecting edges (19) at the circumferential wall (3), which projecting edges (19) extend parallel to the placement protrusion (10).

7. Installation box (1) according to any one of the preceding claims, wherein the placement protrusion (10) comprises an elongated base member (12) and an anchoring member (17) integrally formed with the base member (12), wherein the base member (12) preferably forms a spring lip of which a free end is movable in a direction transverse to the plane of the circumferential wall (3).

8. installation box (1) according to claim 7, wherein the anchoring member (17) comprises a placement edge (14) facing away from the circumferential wall (3) for abutment against the bounding wall, wherein the placement edge (14) changes at an angle into an anchoring edge (16) offset from the circumferential wall, wherein the placement edge (14) preferably changes at a perpendicular or acute angle (18) into the anchoring edge (16).

9. Installation box (1) according to any one of the preceding claims, wherein a locking surface of the anchoring edge (16) faces the lid (9) or extends parallel to a plane defined by the installation opening and/or installation edge (8).

10. Installation box (1) according to any one of the preceding claims, wherein at an insertion end the placement protrusion (10) or an anchoring member (17) thereof comprises a run-on edge (15) having an inclined position with respect to the circumferential wall (3) and the bottom (2).

11. Installation box (1) according to any one of the preceding claims, wherein the lid (9) comprises several placement protrusion (10) placed distributed around a circumferential wall (20) of the lid (9), wherein the placement protrusions preferably (10) are connected to the lid (9) in pairs that are placed evenly distributed around the circumferential edge (20).

12. Installation box (1) according to claim 11, comprising a curved round-going circumferential wall (3), preferably circular, wherein the placement protrusions (10) comprise side edges (14) that face away from the circumferential wall (3) and which when the installation box (1) is not placed define a largest circumscribed circle of the installation box (1).

13. Installation box (1) according to any one of the preceding claims, when depending on claim 5, comprising second attachment means (8, 24) at the lid (9) and the circumferential wall (3) for at least temporarily attaching the lid (9) on the installation opening in addition to or as an alternative to the first attachment means (19, 13), wherein the second attachment means (8, 24) preferably comprise at least one clamping hook (24) or attachment lip at the lid (9).

14. Installation box (1) according to any one of the preceding claims, wherein the lid (9) is made of an injection mouldable synthetic material, preferably a brittle synthetic material.

15. Lid (9) intended and suitable for the installation box (1) according to any one of the preceding claims.

## Patentansprüche

1. Installationsdose (1), die in einem Loch einer Gebäudewand angeordnet werden soll, enthaltend eine Bodenwand (2), eine Umfangswand (3), bei der ein Installationsrand (8) für die Montage eines Schaltermaterials eine Installationsöffnung begrenzt, einen Deckel (9) der die Installationsöffnung abdeckt, und wenigstens einen Anordnungsvorsprung (10), der mit einer das Loch umgebenden Wand in Eingriff gelangt, **dadurch gekennzeichnet, dass** der Anordnungsvorsprung (10) eine Einheit mit dem Deckel (9) bildet.

2. Installationsdose (1) nach Anspruch 1, bei der sich der Anordnungsvorsprung (10) entlang der Außenseite der Umfangswand (3) erstreckt.

3. Installationsdose (1) nach Anspruch 1 oder 2, bei der sich der Anordnungsvorsprung (10) im wesentlichen quer zur Ebene der Installationsöffnung und/oder des Deckels (9) erstreckt.

4. Installationsdose (1) nach einem der vorhergehenden Ansprüche, bei der der Anordnungsvorsprung (10) eine Einheit mit dem Deckel (9) über eine Bruchverbindung (11) bildet, wobei sich die Bruchverbindung (11) vorzugsweise an einem oberen Ende des Anordnungsvorsprungs (10) befindet und/oder sich die Bruchverbindung (11) im Bezug auf den Anordnungsvorsprung (10) vorzugsweise an der Seite des Deckels (9) befindet.

5. Installationsdose (1) nach einem der vorhergehenden Ansprüche, enthaltend erste Anbringungseinrichtungen (19, 23) an der Umfangswand (3) und dem Anordnungsvorsprung (10) für die Anbringung des Deckels (9) an der Installationsöffnung, wobei die ersten Anbringungseinrichtungen (19, 23) vorzugsweise einen ersten Anschlag (23) am Anordnungsvorsprung (10), wobei dieser erste Anschlag vom Deckel (9) beabstandet ist, und einen zweiten Anschlag (19) an der Umfangswand (3), der mit dem ersten Anschlag (23) zusammenwirkt, vorzugsweise etwa auf halber Höhe der Installationsdose (1) enthalten.

6. Installationsdose (1) nach einem der vorhergehenden Ansprüche, bei der die Umfangswand (3) eine Aufnahmeeinrichtung (19) für die wenigstens teilweise Aufnahme des Anordnungsvorsprungs (10) enthält, wobei sich der Anordnungsvorsprung (10) vorzugsweise wenigstens teilweise zwischen hervorstehenden Rändern (19) an der Umfangswand (3) befindet und diese hervorstehenden Ränder (19) parallel zum Anordnungsvorsprung (10) verlaufen.

7. Installationsdose (1) nach einem der vorhergehenden Ansprüche, bei der der Anordnungsvorsprung (10) ein längliches Basiselement (12) und ein Verankerungselement (17) enthält, das mit dem Basiselement (12) integral ausgebildet ist, wobei das Basiselement (12) vorzugsweise eine Federlippe ausbildet, von der ein freies Ende in eine Richtung quer zur Ebene der Umfangswand (3) bewegt werden kann.

8. Installationsdose (1) nach Anspruch 7, bei der das Verankerungselement (17) einen Anordnungsrand (14) enthält, der der Umfangswand (3) abgewandt ist und gegen die umgebende Wand stößt, wobei der Anordnungsrand (14) in einem Winkel in einen Verankerungsrand (16) übergeht, der von der Umfangswand versetzt ist und der Anordnungsrand (14) vorzugsweise in einem senkrechten oder einem spitzen Winkel (18) in den Verankerungsrand (16) übergeht.

9. Installationsdose (1) nach einem der vorhergehenden Ansprüche, bei der eine Arretieroberfläche des Verankerungsrandes (16) dem Deckel (9) zugewandt ist oder sich parallel zu einer Ebene erstreckt, die durch die Installationsöffnung und/oder den Installationsrand (8) definiert ist.

10. Installationsdose (1) nach einem der vorhergehenden Ansprüche, bei der an einem Einfügeende der Anordnungsvorsprung (10) oder ein Verankerungselement (17) desselben einen Auflaufrand (15) aufweist, der im Bezug auf die Umfangswand (3) und den Boden (2) abgeschrägt ist.

11. Installationsdose (1) nach einem der vorhergehenden Ansprüche, bei der der Deckel (9) zahlreiche Anordnungsvorsprünge (10) enthält, die um einen Umfangsrand (20) des Deckels (9) verteilt angeordnet sind, wobei die Anordnungsvorsprünge (10) mit dem Deckel (9) in Paaren verbunden sind, die gleichmäßig um den Umfangsrand (20) des Deckels verteilt sind.

12. Installationsdose (1) nach Anspruch 11, enthaltend eine gekrümmte, umlaufende Umfangswand (3), die vorzugsweise kreisförmig ist, wobei die Anordnungsvorsprünge (10) Seitenränder (14) aufweisen, die der Umfangswand (3) abgewandt sind und die, wenn die Installationsdose (1) nicht eingebaut ist, einen größten umschriebenen Kreis der Installationsdose (1) definieren.

13. Installationsdose (1) nach einem der vorhergehenden Ansprüche, enthaltend bei Abhängigkeit von Anspruch 5 zweite Anbringungseinrichtungen (8, 24) am Deckel (9) und der Umfangswand (3) für die wenigstens vorübergehende Anbringung des Deckels (3) an der Installationsöffnung zusätzlich oder als Alternative zu den ersten Anbringungseinrichtungen (19, 23), wobei die zweiten Anbringungseinrichtungen (8, 24) vorzugsweise wenigstens einen Klemmhaken (24) oder eine Anbringungslippe am Deckel (9) enthalten.

14. Installationsdose (1) nach einem der vorhergehenden Ansprüche, bei der der Deckel (9) aus einem synthetischen Spritzgussmaterial, vorzugsweise einem spröden Synthetikmaterial, besteht.

15. Deckel (9), der einer Installationsdose (1) nach einem der vorhergehenden Ansprüche zugedacht ist und sich für diese eignet.

## Revendications

1. Boîte d'installation (1) destinée à être placée dans un trou dans un mur d'un bâtiment, comportant une paroi de fond (2), une paroi circonférentielle (3) dont un bord d'installation (8) pour la constitution d'une matière de commutation délimite une ouverture d'installation, un couvercle (9) destiné à recouvrir l'ouverture d'installation, et au moins une saillie (10) de positionnement destinée à venir en engagement sur une paroi de délimitation du trou, **caractérisée en ce que** la saillie de positionnement (10) forme un bloc avec le couvercle (9).

2. Boîte d'installation (1) selon la revendication 1, dans laquelle la saillie de positionnement (10) s'étend le long du côté extérieur de la paroi circonférentielle (3).

3. Boîte d'installation (1) selon la revendication 1 ou 2, dans laquelle la saillie de positionnement (10) s'étend sensiblement transversalement au plan de l'ouverture d'installation et/ou du couvercle (9).

4. Boîte d'installation (1) selon l'une quelconque des revendications précédentes, dans laquelle la saillie de positionnement (10) forme un bloc avec le couvercle (9) par l'intermédiaire d'une liaison pouvant être rompue (11), dans laquelle la liaison pouvant être rompue (11) est de préférence située à une extrémité supérieure de la saillie de positionnement (10) et/ou dans laquelle la liaison pouvant être rompue (11) par rapport à la saillie de positionnement (10) est de préférence située sur le côté du couvercle (9).

5. Boîte d'installation (1) selon l'une quelconque des revendications précédentes, comportant des premiers moyens d'attache (19, 23) à la paroi circonférentielle (3) et la saillie de positionnement (10) pour attacher le couvercle (9) sur une ouverture d'installation, dans laquelle les premiers moyens d'attache (19, 23) comprennent de préférence une première butée (23) à la saillie de positionnement (10), laquelle première butée est espacée du couvercle (9), et une seconde butée (19) à la paroi circonférentielle (3) qui coopère avec la première butée (23), de préférence approximativement à la moitié de la hauteur de la boîte d'installation (1).

6. Boîte d'installation (1) selon l'une quelconque des revendications précédentes, dans laquelle la paroi circonférentielle (3) comporte des moyens de logement (19) destinés à loger au moins partiellement la saillie de positionnement (10), dans laquelle la saillie de positionnement (10) est de préférence au moins partiellement située entre des bords saillants (19) à la paroi circonférentielle (3), lesquels bords saillants (19) s'étendent parallèlement à la saillie de positionnement (10).

7. Boîte d'installation (1) selon l'une quelconque des revendications précédentes, dans laquelle la saillie de positionnement (10) comporte un élément de base allongé (12) et un élément d'ancrage (17) formé d'une seule pièce avec l'élément de base (12), dans laquelle l'élément de base (12) forme de préférence une lèvre à ressort dont une extrémité libre est mobile dans une direction transversale au plan de la paroi circonférentielle (3).

8. Boîte d'installation (1) selon la revendication 7, dans laquelle l'élément d'ancrage (17) comporte un bord de positionnement (14) tourné à l'écart de la paroi circonférentielle (3) pour venir en butée contre la paroi de délimitation, dans laquelle le bord de positionnement (14) varie suivant un angle jusque dans un bord d'ancrage (16) décalé de la paroi circonférentielle, dans laquelle le bord de positionnement (14) varie de préférence selon un angle perpendiculaire ou aigu (18) jusque dans le bord d'ancrage (16).

9. Boîte d'installation (1) selon l'une quelconque des revendications précédentes, dans laquelle une surface de verrouillage du bord d'ancrage (16) fait face au couvercle (9) ou s'étend parallèlement à un plan défini par l'ouverture d'installation et/ou le bord (8) d'installation.

10. Boîte d'installation (1) selon l'une quelconque des revendications précédentes, dans laquelle, à une extrémité d'insertion, la saillie de positionnement (10) ou un élément d'ancrage (17) de celle-ci comporte un bord d'avance (15) ayant une position inclinée par rapport à la paroi circonférentielle (3) et au fond (2).

11. Boîte d'installation (1) selon l'une quelconque des revendications précédentes, dans laquelle le couvercle (9) comporte plusieurs saillies de positionnement (10) placées de façon à être réparties autour d'une paroi circonférentielle (20) du couvercle (9), dans laquelle les saillies de positionnement (10) sont de préférence reliées au couvercle (9) par paire qui sont placées de façon à être réparties de manière égale autour du bord circonférentiel (20).

12. Boîte d'installation (1) selon la revendication 11, comportant une paroi circonférentielle (3) courbée de façon arrondie, de préférence circulaire, dans laquelle des saillies de positionnement (10) comportent des bords latéraux (14) qui sont tournés à l'écart de la paroi circonférentielle (3) et qui, lorsque la boîte d'installation (1) n'est pas en place, définissent de plus grands cercles circonscrits de la boîte d'installation (1).

13. Boîte d'installation (1) selon l'une quelconque des revendications précédentes, lorsqu'elle dépend de la revendication 5, comportant des seconds moyens d'attache (8, 24) au niveau du couvercle (9) et de la paroi circonférentielle (3) pour attacher au moins temporairement le couvercle (9) sur l'ouverture d'installation en plus ou en variante des premiers moyens d'attache (19, 23), dans laquelle les seconds moyens d'attache (8, 24) comprennent de préférence au moins un crochet (24) de bridage ou une lèvre d'attache au niveau du couvercle (9).

14. Boîte d'installation (1) selon l'une quelconque des revendications précédentes, dans laquelle le couvercle (9) est réalisé en une matière synthétique pouvant être moulée par injection, de préférence une matière synthétique cassante.

15. Couvercle (9) destiné à, et approprié pour, la boîte d'installation (1) selon l'une quelconque des revendications précédentes.
